# EUROPÄISCHE PATENTSCHRIFT

(11) **EP 0 738 760 B1**
(45) Veröffentlichungstag und Bekanntmachung des Hinweises auf die Patenterteilung: **07.07.1999**
(21) Anmeldenummer: 96105538.1
(22) Anmeldetag: 09.04.1996
(51) Int. Cl.: C08L 77/00, C08L 81/02, C08L 81/06, C08J 9/02

(54) **Polyamid-Schäume und Verfahren zu deren Herstellung**
Polyamide foams and process for their preparation
Mousses de polyamide et procédé pour leur preparation

(30) Priorität: 18.04.1995 DE 19514320
(43) Veröffentlichungstag der Anmeldung: 23.10.1996
(73) Patentinhaber: Ticona GmbH, 65451 Kelsterbach (DE)
(72) Erfinder: Schönfeld, Axel, Dr., 65207 Wiesbaden (DE); Frank, Georg, Dr., 72074 Tübingen (DE); Schleicher, Andreas, Dr., 65614 Beselich (DE); Scheckenbach, Helmut, Dl., 63225 Langen (DE); Weis, Siegfried, 65817 Eppstein (DE)

(56) Entgegenhaltungen:
- WO-A-96/05246
- WO-A-96/05252
- DATABASE WPI Week 8851 Derwent Publications Ltd., London, GB; AN 88-365210 XP002008792 & JP-A-63 275 667 (KANEBO KK) , 14.November 1988

## Beschreibung

Die Erfindung betrifft eine Formmasse auf Basis von Mischungen, die Sulfoxidgruppen- haltige Polymere und ein Polyamid enthält, und ein Verfahren zur Herstellung von einem geschäumten Polyamid durch thermische Behandlung der Formmasse.

Üblicherweise werden Polymermassen geschäumt, indem der Polymermasse ein niedermolekulares Blähmittel zugesetzt wird, das in der Hitze gasförmige Abspaltprodukte freisetzt.

Es wurde überraschend gefunden, daß Mischungen von einem Polyamid mit Polymeren, die Sulfoxidgruppen enthalten, leicht einen Schaum bilden. Unter der Einwirkung von Hitze zersetzt sich das Sulfoxidgruppen enthaltende Polymer, wobei Gase entstehen, die zum Aufschäumen der Polymermasse führen.

Die Erfindung betrifft eine Formmasse, die ein Polyamid und mindestens ein Sulfoxidgruppen enthaltendes Polymer enthält.

Geeignete Polyamide sind z. B. aliphatische, aromatische und aliphatischaromatische Homopolyamide, aliphatische und aromatische Copolyamide und ihre Mischungen. Verwendung finden beispielsweise semikristalline und amorphe Polyamide mit einem Molekulargewicht von > 5000, vorzugsweise von 5000 bis 70 000 und insbesondere von 10 000 bis 65 000, die allgemein als ®Nylon bezeichnet werden. Hierzu zählen Polyhexamethylen-adipinamid (Nylon 66), Polyhexamethylenazelainamid (Nylon 69), Polyhexamethylensebacinamid (Nylon 610), Polyhexamethylendodecandiamid (Nylon 612), Polytetra-methylenadipinamid (Nylon 46), Polydodecanmethylendodecanamid (Nylon 1212), Polycyclamid Q2 (Nylon C8). Verwendung finden auch durch Ringöffnung von Lactamen hergestellte Polyamide, wie Polycaprolactam (Nylon 6), Polylaurin-säurelactam (Nylon 12), Poly-11-aminoundecansäure (Nylon 11) und Di(p-aminocyclohexyl)methandodecandisäureamid. Auch aromatische Polyamide, wie Polyxylylenadipinamid (Nylon MXD 6), Polytrimethylhexamethylenterephthalamid (Nylon 6-3-T), Polyhexamethylendiaminterephthalamid und Polyhexamethylenisophthalamid sind geeignet. Zur Anwendung kommen ferner Polyamide, die durch Copolymerisation von mindestens zwei der oben genannten Polymeren oder deren Aufbaukomponenten hergestellt werden, beispielsweise ein Copolymeres aus Adipinsäure, Isophthalsäure und Hexamethylendiamin.

Vorzugsweise sind die Polyamide linear und haben einen Schmelzpunkt oberhalb von 170 °C. Von diesen Polyamiden sind insbesondere Polyamid 46 (enthaltene Struktureinheiten: -NH-(CH₂)₄-NH-CO-(CH₂)₆-CO-) und Polyamid 66 sowie Blends aus diesen beiden Polyamiden geeignet.

Polyamide sind beschrieben in "Ullmann's Encyclopedia of Industrial Chemistry, Vol. A21, Chapter 'Polyamides', VCH Publishers, Weinheim/New York 1992, Seite 179 - 205", worauf Bezug genommen wird.

Unter Sulfoxidgruppen enthaltenden Polymeren werden Polymere oder Oligomere verstanden, die wenigstens eine Arylensulfoxid - Einheit (-Ar-SO-; Ar = Arylen) enthalten. Den Arylenen liegen beispielsweise ein- oder mehrkernige Aromaten, die ein- oder mehrfach substituiert sein können, zugrunde. Beispiele sind Phenylen, Biphenylen (-C₆H₄-C₆H₄-), Naphthalen, Anthracen oder Phenanthren.

Substituenten sind z. B. geradkettige, cyclische oder verzweigte C₁-C₂₀-Kohlenwasserstoffreste,
wie C₁-C₁₀-Alkylreste, z. B. Methyl, Ethyl, n-Propyl, iso-Propyl, n-Buthyl, t-Buthyl, n-Hexyl oder C₆-C₁₄-Arylreste, z. B. Phenyl oder Naphthyl, Halogene, Sulfonsäure-, Amino-, Nitro-, Cyano-, Hydroxy-, Alkyloxy oder Carboxylgruppen.

Bevorzugte Sulfoxidgruppen enthaltende Polymere sind Polyarylensulfidsulfoxide und Polyarylensulfoxide, insbesondere Polyphenylensulfidsulfoxid und Polyphenylensulfoxid, die z. B. leicht durch teilweise oder vollständige Oxidation der Schwefelgruppen von Polyarylensulfiden mit Ozon, Salpetersäure oder NO₂/N₂O₄ hergestellt werden können. Günstig erweist sich ein Sulfoxid-Anteil (bezogen auf alle Schwefel enthaltenden Brücken im Polymer) von mindestens 50 %, insbesondere von mindestens 95 %. Polyarylensulfidsulfoxide werden im folgenden auch als Polyarylensulfoxide verstanden und werden von dem Begriff Polyarylensulfoxide miterfaßt. Die Polyarylensulfoxide können auch Anteile an Sulfongruppen enthalten. Die Herstellung der Sulfoxidgruppen enthaltenen Polymere ist zum Beispiel in den deutschen Patentanmeldungen DE 4314735, DE 4314736, DE 4440010 und DE 19531163 beschrieben, worauf Bezug genommen wird.

Die Formmasse enthält bevorzugt (bezogen auf den Gesamt-Polymeranteil der Formmasse) 1 bis 50 Gew.-%, insbesondere 3 bis 20 Gew.-%, eines Sulfoxidgruppen enthaltenden Polymers.

Die Formmasse oder eine Mischung, die mindestens ein Polyamid und mindestens ein Sulfoxidgruppen enthaltendes Polymer enthält, kann ab einer Temperatur um 300 °C in einen Kunststoffschaum überführt werden.

Ein weiterer Gegenstand der Erfindung ist somit ein Schaumstoff, erhältlich durch Erhitzen von einer Mischung oder Formmasse, die mindestens ein Polyamid und mindestens ein Sulfoxidgruppen enthaltendes Polymer enthält, bei einer Temperatur von mindestens 300 °C.

Gegenstand der Erfindung ist auch ein Verfahren zur Herstellung eines Schaumstoffes durch Erhitzen von einer Mischung oder Formmasse, die mindestens ein Polyamid und mindestens ein Sulfoxidgruppen enthaltendes Polymer enthält, bei einer Temperatur von mindestens 300 °C.

Der erzielbare Schäumungeffekt hängt von der Art des Sulfoxidgruppen enthaltenden Polymers, insbesondere von der Menge der Sulfoxidgruppen ab und von dem Anteil des Sulfoxidgruppen enthaltenden Polymers in der Polymer-Mischung. Außerdem hängt der Schäumungseffekt von der Schmelzviskosität des zu verschäumenden Polyamids und von der Verarbeitungstemperatur ab.

Das Erhitzen der Mischung oder der Formmasse zur Schäumung erfolgt im allgemeinen in einem Temperaturbereich zwischen 200 °C bis 450 °C. Der Temperaturbereich hängt von der Struktur des verwendeten Sulfoxidgruppen enthaltenden Polymers sowie des zu verschäumenden Polyamids ab und kann daher auch außerhalb des genannten Temperaturbereiches liegen. Bei Verwendung von Polyphenylensulfoxid (Sulfoxid-Anteil mindestens 95 %) liegt die Schaumbildungstemperatur vorzugsweise im Bereich von 300 °C bis 350 °C.

Gegenstand der Erfindung ist ein mehrphasiges Blend, erhältlich durch Erhitzen von einer Mischung oder Formmasse, die mindestens ein Polyamid und mindestens ein Sulfoxidgruppen enthaltendes Polymer enthält, bei einer Temperatur, bei der noch keine Schaumbildung erfolgt und das Polyamid als Schmelze vorliegt.

Zum Beispiel bei Verwendung von Polyphenylensulfoxid (Sulfoxid-Anteil mindestens 95 %) kann zunächst eine ungeschäumte Formmasse bei Temperaturen unterhalb von 300 °C hergestellt werden. Diese ungeschäumte Formmasse kann durch thermische Behandlung oberhalb von 300 °C in eine geschäumte Formmasse oder ein geschäumtes Formteil überführt werden.

Gemäß der Erfindung können als Polyamid auch Mischungen oder Blends verschiedener Polyamide und gegebenenfalls anderer Polymere und als Sulfoxidgruppen enthaltendes Polymer auch Mischungen verschiedener Sulfoxidgruppen enthaltenden Polymere eingesetzt werden.

Die Mischungen oder Formmassen gemäß der Erfindung können übliche Additive enthalten, wie thermische Stabilisatoren, UV-Stabilisatoren, Antistatika, Flammschutzmittel, Farbstoffe, Pigmente, anorganische und/oder organische Füllmittel (Pulver, Fasern usw.) oder Gleitmittelzusätze wie Molybdändisulfid, Graphit oder Polytetrafluorethylen.

Zur Herstellung des Schaumes sollte das Sulfoxidgruppen enthaltende Polymer möglichst fein und gleichmäßig in der Mischung oder Formmasse verteilt sein. Dies wird beispielsweise durch Verwendung feiner Pulver erreicht. Es besteht auch die Möglichkeit, eine gute Vermischung durch eine thermische Verarbeitung, z. B. mit handelsüblichen Knetern oder Extrudern, vorzugsweise Zweiwellenextrudern, bei Temperaturen, bei denen das zu verschäumende Polyamid aufschmilzt, erzielt werden.

Die Sulfoxidgruppen enthaltenden Polymere, insbesondere solche, die bei den Verarbeitungstemperaturen nicht aufschmelzen, sollten, um einen gleichmäßigen Schaum zu erzielen, als möglichst feines Pulver verwendet werden. Im allgemeinen liegen die mittleren Korngrößen des Pulvers im Bereich von um 0,3 bis 500 µm, vorzugsweise von 5 bis 300 µm, besonders bevorzugt von 5 bis 100 µm.

Das mittlere Molekulargewicht der Sulfoxidgruppen enthaltenden Polymere, ausgedrückt als Gewichtsmittel M_{W}, liegt im allgemeinen zwischen 4 000 und 200 000 g/mol, bevorzugt zwischen 10 000 und 150 000 g/mol, besonders bevorzugt zwischen 25 000 und 100 000 g/mol.

Die erfindungsgemäße Formmasse als solche ebenso wie der daraus hergestellte Schaumstoff können zur Herstellung von Formteilen verwendet werden. Die Formteile können als hochbeanspruchbare Funktionsbauteile, beispielsweise im Flugzeugbau, im Automobilbau und der Elektronik, verwendet werden. Weitere Verwendungen der Formteile bieten sich im chemischen Apparatebau an. Die Schäume oder Formteile können auch als wärmebeständige Isolationsmaterialien dienen.

Die Materialien können frei oder in Preßwerkzeugen verschäumt werden, so daß man bereits fertige Bauteile erhalten kann, die häufig als Integralschaum vorliegen.

Vorteile des erfindungsgemäßen Verfahrens zur Herstellung schaumförmiger Polyamide sind darin zu sehen, daß
- kein Zusatz von niedermolekularen Treibmitteln notwendig ist,
- das Verfahren mit einfachen technischen Mitteln durchführbar ist,
- Schäume mit besonders geringer Dichte möglich sind
- und daß ein breiter Bereich des Schäumungsgrades und der Porengröße einstellbar sind.

Die Erfindung soll nachfolgend durch die Ausführungsbeispiele noch näher erläutert werden, ohne aber auf die konkret dargestellten Ausführungsformen beschränkt zu sein.

### Beispiele:

### 1. Herstellung von Polyphenylensulfoxid:

54,08 g Polyphenylensulfid (®Fortron 0205 B4, Hoechst) werden in 300 ml 99 %-ige Dichloressigsäure und 1 g 95 - 97 %-ige Schwefelsäure in einem Vierhalskolben mit Rührer bei Raumtemperatur suspendiert. Anschließend werden unter Rühren 46 g N₂O₄ mit einer Tropfgeschwindigkeit von 1 ml/Minute zugetropft. Anschließend wird für 2 Stunden bei 50 °C gerührt, wobei nach etwa 20 Minuten das gebildete Polyphenylensulfoxid in Lösung geht. Überschüssiges N₂O₄ gast zum teil während des Rührens aus. Restliches N₂O₄ in der Lösung wird mittels einer Kapillare mit Stickstoffgas für 1 Stunde bei 50 °C ausgetrieben. Zur Ausfällung des Produktes wird die Lösung mit 4l entsalztem Wasser vermischt (Ultraturax). Das Produkt wird abfiltriert und getrocknet. ESCA-Analyse des Produktes ergibt, daß ca. 98 % der Schwefelgruppen des eingesetzten Polyphenylensulfids zu Sulfoxidgruppen umgewandelt sind (Polyphenylensulfoxid mit Sulfoxid-Anteil um 98 %). Die Dichte des Polyphenylensulfoxid beträgt 1,40 g/cm³.

### 2. Herstellung von Polyamid-Schaum

In eine Aluminiumschale mit den Abmessungen 7 cm x 7 cm wurde eine Formmasse aus 42,5 g feingemahlenem Nylon 46 und 7,55 g feingemahlenem Polyphenylensulfoxid eingefüllt und über eine Zeitdauer von 25 Minuten bei eienr Temperatur von 325 °C in einem geschlossenen Ofen geheizt. Dabei bildete sich ein Schaum mit einer dichten, geschlossenen Außenhaut (Integralschaum). Die Dichte des Schaums betrug 0,33 g/cm³ (zum Vergleich: Die Dichte des reinen Nylon 46 beträgt 1,18 g/cm³).

Der Schaum zeigte die für dieses Polyamid erwartete Temperaturbeständigkeit.

## Patentansprüche

1. Formmasse, enthaltend mindestens ein Polyamid und mindestens ein Sulfoxidgruppen enthaltendes Polymer.

2. Formmasse nach Anspruch 1, dadurch gekennzeichnet, daß das Sulfoxidgruppen enthaltende Polymer Polyarylensulfoxid-Einheiten der Formel
-(-C₆H₄-SO-)-
enthält.

3. Formmasse nach Anspruch 1, dadurch gekennzeichnet, daß als Sulfoxidgruppen enthaltendes Polymer Polyphenylensulfoxid, Polyphenylensulfidsulfoxid oder Polyphenylensulfidsulfoxidsulfon dient.

4. Formmasse nach einem oder mehreren der Ansprüche 1 bis 3, dadurch gekennzeichnet, daß als Polyamid Polyamid 46 oder Polyamid 66 verwendet wird.

5. Formmasse nach einem oder mehreren der Ansprüche 1 bis 4, dadurch gekennzeichnet, daß sie 1 bis 50 Gew.-%, bevorzugt 3 bis 20 Gew.-% eines Sulfoxidgruppen enthaltenden Polymers enthält.

6. Verfahren zur Herstellung eines Schaumstoffs aus einer Formmasse oder Mischung, die mindestens ein Polyamid und mindestens ein Sulfoxidgruppen enthaltendes Polymer enthält, dadurch gekennzeichnet, daß die Formmasse bei einer Temperatur im Bereich von 200 °C bis 450 °C erhitzt wird.

7. Verfahren nach Anspruch 6, dadurch gekennzeichnet, daß im Bereich von 300 °C bis 350 °C erhitzt wird.

8. Verfahren nach Anspruch 6 oder 7, dadurch gekennzeichnet, daß das Erhitzen über eine Zeit von 5 bis 60 Minuten durchgeführt wird.

9. Schaumstoff, erhältlich durch Erhitzen von einer Mischung oder Formmasse, die mindestens ein Polyamid und mindestens ein Sulfoxidgruppen enthaltendes Polymer enthält, bei einer Temperatur von mindestens 300°C.

10. Schaumstoff nach Anspruch 9, dadurch gekennzeichnet, daß dieser eine um mindestens 50 Prozent gegenüber dem unverschäumten Material verringerte Dichte aufweist.

11. Verwendung von Schaumstoff nach Anspruch 9 oder 10 zur Herstellung von Formteilen.

12. Verwendung von Schaumstoff nach Anspruch 9 oder 10 zur Herstellung von temperaturbeständigen Isolierschichten oder Isolierteilen.

13. Verwendung eines Sulfoxidgruppen enthaltenden Polymers zur Herstellung von geschäumten Polyamiden.

14. Blend, erhältlich durch Erhitzen von einer Mischung oder Formmasse, die mindestens ein Polyamid und mindestens ein Sulfoxidgruppen enthaltendes Polymer enthält, bei einer Temperatur, bei der noch keine Schaumbildung erfolgt und das Polyamid als Schmelze vorliegt.

## Claims

1. A molding composition comprising at least one polyamide and at least one polymer containing sulfoxide groups.

2. A molding composition as claimed in claim 1, wherein the polymer containing sulfoxide groups comprises polyarylene sulfoxide units of the formula -(-C₆H₄-SO-)- .

3. A molding composition as claimed in claim 1, wherein polyphenylene sulfoxide, polyphenylene sulfide sulfoxide or polyphenylene sulfide sulfoxide sulfone is used as polymer containing sulfoxide groups.

4. A molding composition as claimed in one or more of claims 1 to 3, wherein the polyamide used is polyamide 46 or polyamide 66.

5. A molding composition as claimed in one or more of claims 1 to 4, containing from 1 to 50% by weight, preferably from 3 to 20% by weight of a polymer containing sulfoxide groups.

6. A process for producing a foam from a molding composition or mixture comprising at least one polyamide and at least one polymer containing sulfoxide groups, which comprises heating the molding composition at a temperature in the range from 200°C to 450°C.

7. The process as claimed in claim 6, wherein heating is carried out in the range from 300°C to 350°C.

8. The process as claimed in claim 6 or 7, wherein the heating is carried out over a period of from 5 to 60 minutes.

9. A foam obtainable by heating a mixture or molding composition comprising at least one polyamide and at least one polymer containing sulfoxide groups at a temperature of at least 300°C.

10. A foam as claimed in claim 9, having a density which is at least 50 percent less than that of the unfoamed material.

11. The use of foam as claimed in claim 9 or 10 for the production of moldings.

12. The use of foam as claimed in claim 9 or 10 for the production of temperature-resistant insulating layers or insulating parts.

13. The use of a polymer containing sulfoxide groups for the production of foamed polyamides.

14. A blend obtainable by heating a mixture or molding composition comprising at least one polyamide and at least one polymer containing sulfoxide groups at a temperature at which no foam formation yet occurs and the polyamide is present as a melt.

## Revendications

1. Composition à mouler contenant au moins un polyamide et au moins un polymère renfermant des groupes sulfoxyde.

2. Composition à mouler selon la revendication 1, caractérisée en ce que le polymère renfermant des groupes sulfoxyde renferme des motifs polyarylène-sulfoxyde de formule
-(-C₆H₄-SO-)-.

3. Composition à mouler selon la revendication 1, caractérisée en ce que le polyphénylène-sulfoxyde, le polyphénylène-sulfure-sulfoxyde ou le polyphénylène-sulfure-sulfoxyde-sulfone sert de polymère renfermant des groupes sulfoxyde.

4. Composition à mouler selon l'une ou plusieurs des revendications 1 à 3, caractérisée en ce que l'on utilise le Polyamide 46 ou le Polyamide 66 en tant que polyamide.

5. Composition à mouler selon l'une ou plusieurs des revendications 1 à 4, caractérisée en ce qu'elle contient de 1 à 50% en poids, de préférence de 3 à 20% en poids d'un polymère renfermant des groupes sulfoxyde.

6. Procédé de préparation d'une mousse à partir d'une composition à mouler ou d'un mélange qui contient au moins un polyamide et au moins un polymère renfermant des groupes sulfoxyde, caractérisé en ce que la composition à mouler est chauffée à une température dans la gamme de 200°C à 450°C.

7. Procédé selon la revendication 6, caractérisé en ce que l'on chauffe dans la gamme de 300°C à 350°C.

8. Procédé selon la revendication 6 ou 7, caractérisé en ce que le chauffage est réalisé sur une période de 5 à 60 minutes.

9. Mousse pouvant être obtenue par chauffage d'un mélange ou d'une composition à mouler qui contient au moins un polyamide et au moins un polymère renfermant des groupes sulfoxyde à une température d'au moins 300°.

10. Mousse selon la revendication 9, caractérisée en ce que celle-ci présente une densité réduite d'au moins 50 pour cent par rapport au matériau non transformé en mousse.

11. Utilisation d'une mousse selon la revendication 9 ou 10 pour la production de pièces moulées.

12. Utilisation d'une mousse selon la revendication 9 à 10 pour la production de couches isolantes ou de pièces isolantes résistant à la chaleur.

13. Utilisation d'un polymère renfermant des groupes sulfoxyde pour la préparation de polyamides moussés.

14. Alliage polymère pouvant être obtenu par chauffage d'un mélange ou d'une composition à mouler qui contient au moins un polyamide et au moins un polymère renfermant des groupes sulfoxyde, à une température à laquelle la formation de mousse n'a pas encore lieu et le polyamide est présent sous forme de masse fondue.
